# EUROPEAN PATENT APPLICATION

(11) **EP 3 235 359 A1**
(43) Date of publication of application: **25.10.2017**
(21) Application number: 16002669.6
(22) Date of filing: 16.12.2016
(51) Int. Cl.: A01B 49/06, A01B 79/00, A01C 7/06, A01C 23/00

(54) **SOIL TILLAGE UNIT**

(30) Priority: 23.12.2015 PL 41548115
(71) Applicant: Przedsiebiorstwo Produkcyjno Uslugowo Handlowe AKPIL, Kazimierz Aniol, 39-220 Pilzno (PL)
(72) Inventor: Aniol, Kazimierz, 39-220 Pilzno (PL); Synowiecki, Marek, 39-231 Siedliska Bogusz (PL)
(74) Representative: Krawczyk, Lilianna

(57) **Abstract**

Soil tillage unit with modular design with modules for sowing fertilizers, soil cultivation and sowing seeds, and with a control system coupled with GPS module, wherein it comprises a module for dispensing liquid organic fertilizer to the soil, a module for dispensing mineral fertilizers, a soil cultivation module, and a grain sowing module, as well as an electronic control system for dispensing mineral and organic fertilizers coupled with the variable rate dispensing module for fertilizers.

## Description

The subject of the invention is the soil tillage unit designed for the interrow placement of liquid mineral and organic fertilizers and for sowing grains. The unit can be used in an agricultural system that adjusts the elements of agrotechnology to farmland conditions.

The modem agriculture must be based on expertise and implement new technologies ensuring production profitability on a farm while fulfilling environmental protection requirements and ensuring food safety.

The traditional plant cultivation methods in use take the variability of habitat conditions into account to a small extent. Doses of fertilizers, plant pesticides, amounts of distributed fertilizers and machine working parameters are determined for averaged conditions within a field area. Due to high differences in the content of mineral components in a given field, with the current cultivation methods, fertilizers have locally been overdosed in a rich soil and underdosed in a poor soil.

Precision farming constitutes a set of technologies, which creates a comprehensive agricultural system while adjusting, as part of the system, individual agrotechnology components to variable conditions in individual ploughlands. It is possible to use the system throughout the agricultural cycle. The production consists in undertaking appropriate agricultural practices in due time, when applying optimum amounts of agents.
At present, due to a huge technological progress, fertilizers and pesticides can be used in a manner, which is more rational and safe to the environment and humans.
It is justified that fertilizers should be applied in differentiated doses adjusted to the variability, in terms of the soil reaction and content of plant nutrients, of the acreage intended for cultivation. New technologies introduced to agriculture make it possible to apply fertilizers and pesticides where they are necessary and in optimum amounts. Such activities have formed the basis for the precision farming.
The precision farming constitutes the whole set of technologies creating an agricultural system, which adjusts all agrotechnology components to variable conditions in individual ploughlands. The precision farming is also understood as farming with the use of information technologies, in order to obtain higher yields of better quality while reducing production costs and environmental pollution.
The precision fanning system combines the knowledge of variable soil richness and soil productivity and adjusts doses of fertilizers and pesticides, as well as amounts of agricultural practices to a potential demand of plants.
The precision farming management concept is based on knowledge supported by the state-of the-art information and telecommunication technologies with the use of suitable agricultural machines and devices.
In other words, the precision farming is a computer-aided farming management, which is mainly based on gathering data on spatial differentiation of crops within a field. Yield maps are used in fertilisation and crop protection practices, in order to ensure that those parts of the field that are able to have a higher yield, will receive more intense fertilisation and crop protection. The precision farming management concept ensures that higher and better quality yields are obtained while optimising the related expenses, especially expenses for fertilizers and pesticides.
In order to start taking advantage of the precision farming you should:
- perform accurate measurements of the cultivation area and then examine the soil richness,
- draw up an isoline soil variability and richness map,
- work out a fertilization plan, i.e. plan a fertilizer dose separately for each richness zone,
- select tools and devices that allow the new knowledge to be utilised,
- keep records of data on the costs and profitability of a given acreage.

### The precision farming:

- is used to increase profits due to the rational utilisation of resources based on data provided,
- saves the environment,
- facilitates farm management,
- allows the farmer to consciously take farming management decisions.

Agricultural machines for applying slurry, machines for fertilizing or soil tillage units with fertilisation function are known from the development of technology.
A suspended fertilizer-distributor is a machine designed as a single- or double-disk one. The machine is composed of a frame, which is fixed to the tractor's three-point suspension system, fertilizer tank, distributing disk (or 2 disks), distributing outlet with variable position and adjustable cross-section. Suitable adjustable guides, whose position depends on the type of distributed fertilizer (granulated, dusty) are mounted on the distributing disks. Similarly, the position of the opening feeding the fertilizer onto the disk is changed. The working width of fertilizer distributors is 20 to 30 m. The newest solutions offer computer aided fertilizers distribution based on the fertilization map drawn up and controlled by a GPS receiver.

Unexpectedly, it has turned out to be possible to combine, in one agricultural machine, functionalities including organic and non-organic fertilization, soil cultivation and grain sowing.
The subject of the invention is the soil tillage unit with a modular design, with modules for distributing fertilizers, cultivating soil and sowing seeds and with a control system coupled with a GPS module, for implementing the precision farming assumptions, comprising the module dispensing liquid organic fertilizer to soil, module dispensing mineral fertilizers, soil cultivation module and grain sowing module, as well as equipped with an electronic control system for dispensing mineral and organic fertilizers with the control system being coupled with the variable rate dispensing module for fertilizers.

- Favourably, organic and mineral fertilizers are dispensed and grains are sowed by using a soil richness map through an integrated control panel, which controls the dosing of mineral and organic fertilizers.

Favourably, the unit has a software allowing the user to optimise the fertilization process depending on the plant being sowed and soil richness.

Favourably, the unit has a software allowing the user to optimise the fertilization process depending on the soil acidity.

Favourably, the unit has a controller, which controls the dispensing of mineral and organic fertilizers independently of the unit speed.

The unit according to the invention combines, in one process, cultivation and sowing activities with precision mineral and organic fertilization. The unit includes such functionalities that have been available in a few machines, so far and the combination of organic fertilizers dispensing to soil with the precision farming principles is a new and original solution.
Dispensing organic fertilizers to soil by the unit according to the invention will reduce . ammonia emission, thereby increasing the share of nitrogen coming from organic fertilizer in the fertilization process.
Ammonia emission is the key problem related to the dispensing of slurry or manure. Ammonia losses during the application of manures onto arable land can be up to 30%. Using Soil applicators used for the deep injection of organic fertilizer allow the losses to be reduced even by 90% as compared with the traditional distribution methods using liquid manure spreaders with splash plates.
The unit allows the user to perform several process steps, such as soil cultivation, sowing, organic fertilization, mineral fertilization, during one run. The unit reduces the number of tractor runs two or even three times thus reducing fuel consumption in the production process. Due to the use of soil richness map and fertilizer doses automatically adjusted to the soil richness, the consumption of fertilizers will be optimised, which, in turn, will reduce their consumption per unit yield.
The unit according to the invention will be used for cultivating the following plants: wheat, barley, rye, oat, triticale, millet, mustard, field bean (*Ficia Faba L.* (*partim*)), pea, lentil, soya, etc. This list does not exhaust all possible plants that could be sown by using this unit.
The unit according to the invention combines, in one process, cultivation and sowing activities with precision mineral and organic fertilization. The unit includes such functionalities that have been available in several machines so far and the combination of organic fertilizer dispensing to soil with the precision farming principles is a new and original solution. These two functionalities have been performed so far by two separate machines. Due to its modular design and the possibility of selecting parameters for individual subassemblies, the unit according to the invention allows the user to match the machine parameters to the specific features of the farm, wherein the unit is to be used.

Using the unit according to the invention will allow farmers to increase the yield per hectare, due to the fact that both organic and mineral fertilizers are dosed in a smart manner adjusted to the needs for soil nutrients present in a given cultivation area.
Using the unit according to the invention will allow farmers to optimise the production costs by optimising the amounts of fertilizers used in production, through the farmer's working time optimisation.
Using the unit according to the invention reduces crop over-fertilization risk and in a long term, it may result in the soil structure improvement and mineralization.

The innovative solutions, as applied in the unit according to the invention, limit energy consumption in soil cultivation processes, as well as, support environmental protection.

The unit according to the invention enables the innovative precision farming technologies to be implemented in agriculture. The unit will have an impact on yield increase and fertilizer consumption optimisation. The precision dosing of organic and mineral fertilizers improves the soil condition and assimilability of fertilizers.

It is of vital importance that the unit according to the invention allows the farmer to reduce time required by sowing and cultivation works.

Sowing combined with mineral and organic fertilization in one process is the key functionality of the unit according to the invention.

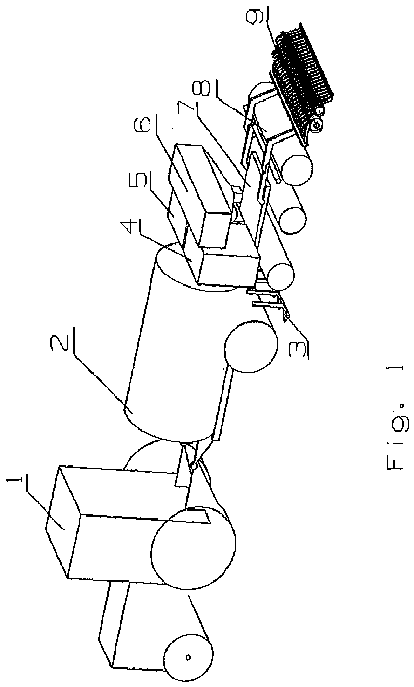

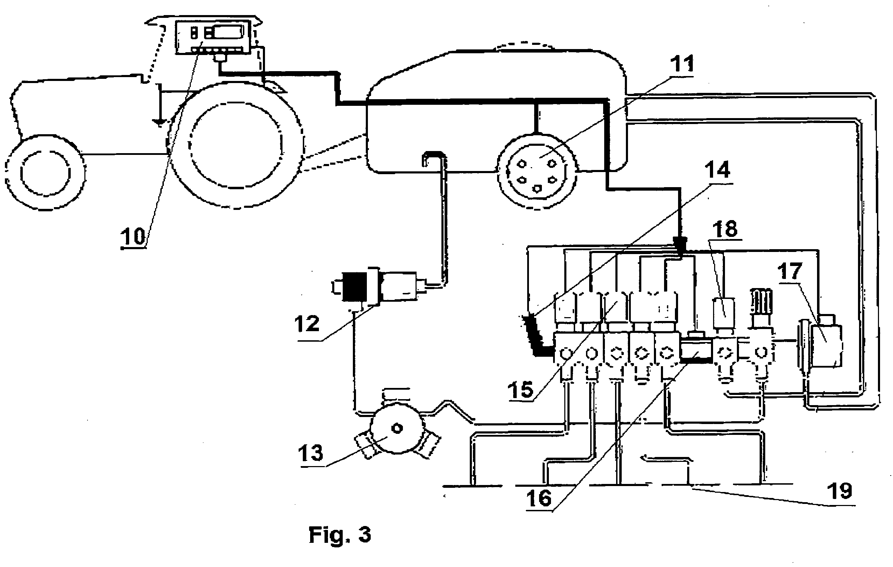

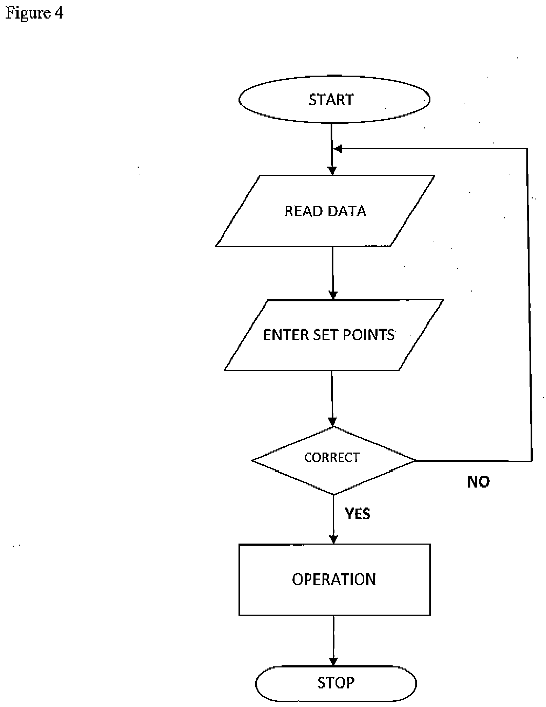

The subject of the invention is shown in construction examples in the figures, where Fig. 1 shows the unit's modular design in an axonometric view, Fig. 2 shows the transfer of signals to control systems, Fig. 3 identifies acquisition points of data for the control system of the unit, Fig. 4 shows the diagram for using data for sowing and fertilization control.

### Example 1.

The soil tillage unit contains tank for liquid manure or slurry 2 with a capacity of 4 to 8 m³, applicators 3 of the tank content allowing the organic fertilizer to be dispensed at the user set depth under the soil surface. Applicators 3 are equipped with protections against damages and mechanical barriers. The unit has tanks 4 and 5 for liquid fertilizers with dispensing pipe systems. The capacity of each tank is about 500 dm³. The unit has also tank 6 for sowable material.

The unit is equipped with a cultivation module consisting of cultivation machine 7 - a disk unit and at least levelling and crushing and compacting shaft 8. The cultivation module enables the user to properly prepare the soil.

The unit according to this invention is equipped with a sowing module, which in addition to sowable material tank 6, is composed of double-disk sowing sections 9.

The unit is designed as a device to be towed by a 100 to 150 kW tractor.

The unit's width is not more than 3 metres.

The working modules are coupled with each other and with the tractor by systems that enable all the components to effectively work in one process line with the systems enabling the unit operation in many configurations using all the modules at the same time or some of them only.

The unit is equipped with devices controlling media flows both in the main pipe and in applicators or dispensing sections.

The unit is equipped with control systems for the unit's individual modules. The system controlling the amounts of both organic and mineral fertilizers sown is of vital importance.

The system is coupled, by means of a computer programme, with a database containing data on soil richness, which data is used to determine the amounts of fertilizer and sowable material to be sown depending on the plant being sown and soil richness.

The unit is also equipped with a flow capacity control system for distribution pipes.

The unit according to the invention allows the user to perform the following works in one working cycle: sowing, cultivation works, mineral and organic fertilization. The precision dispenser of mineral and organic fertilizers used in the unit together with the soil richness map allow the user to match the amounts of metered fertilizers to the actual needs of a given cultivation area and plant cultivated.

Such an approach to the fertilization process allows the consumption rate of fertilizers per hectare to be reduced and fertilizer amount in relation to the yield to be optimised.

The unit's modular design allows the user to satisfy his specific needs, as well as, to add successive modules to the unit during its use.

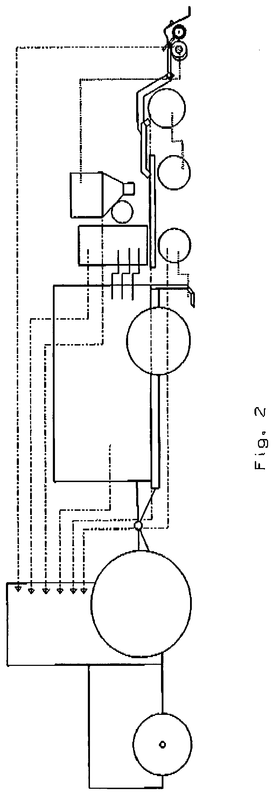

Figure 2 shows the transfer of signals to the unit's control systems, as well as the functional diagram for the unit subassemblies.
1. Lines 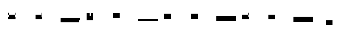 set points as assumed by the user
2. Lines 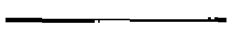 mechanical dependencies affecting proper soil treatment
3. Lines 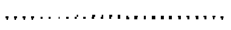 electronic dependencies controlled and changed during the machine operation

Control panel 10 uses the data received from the following sensors: speed sensor 11, pressure sensor 14.

Data taken from other measuring points such as: filter 12, pump 13, section valves 15, flowmeter 16, control valve 17, main valve 18 and spraying section 19, will also be used to properly control the unit.

Data on crop mapping, soil quality mapping, soil richness mapping, plant species to be sowed, as well as its requirements and cultivation needs is used as input data for the controller.

The following output data is obtained:
- sowing method and fertilizer dose control,
- seed-grain amount control,
- tool components operation control.

## Claims

1. The soil tillage unit with modular design with modules for sowing fertilizers , soil cultivation and sowing seeds and with the control system coupled with GPS module, **characterised in that** it comprises the module for dispensing liquid organic fertilizer to soil, module for dispensing mineral fertilizers, soil cultivation module and grain sowing module, as well as has the electronic control system for dispensing mineral and organic fertilizers with the control system being coupled with the variable rate dispensing module for fertilizers.

2. The soil tillage unit as recited in claim 1 **characterised in that** it uses the soil richness map for sowing grains through the integrated control panel for dispensing organic and mineral fertilizers.

3. The soil tillage unit as recited in claim 1 **characterised in that** it has the software allowing the user to optimise the fertilization process depending on the plant to be sown and soil richness.

4. The soil tillage unit as recited in claim 1 **characterised in that** it has the software allowing the user to optimise the fertilization process depending on soil acidity.

5. The soil tillage unit as recited in claim 1 **characterised in that** it has the controller, which controls the dispensing of mineral and organic fertilizers independently of the unit speed.
